(19) Europäisches Patentamt

European Patent Office

Office européen des brevets

(11) EP 0 182 962 B2

(12) NEW EUROPEAN PATENT SPECIFICATION

(45) Date of publication and mention
of the opposition decision:
**14.02.1996  Bulletin 1996/07**

(45) Mention of the grant of the patent:
**11.10.1989  Bulletin 1989/41**

(21) Application number: **85106538.3**

(22) Date of filing: **28.05.1985**

(51) Int Cl.⁶: **C09D 5/29**

(54) **Method for the formulation and preparation of heterochromatic paints and related products**

Methode zur Formulierung und Herstellung heterochromer Anstrichfarben und ähnlicher Produkte

Méthode de formulation et de préparation de revêtements hétérochromes et de produits apparentés

(84) Designated Contracting States:
**AT BE CH DE FR GB IT LI LU NL SE**

(30) Priority: **28.11.1984 IT   4010884**

(43) Date of publication of application:
**04.06.1986  Bulletin 1986/23**

(73) Proprietors:
- **SPETRA S.R.L.**
  **I-41034 Finale Emilia (IT)**
  Designated Contracting States:
  **IT**
- **BRIDGEFIELD B.V.**
  **NL-1000 AZ Amsterdam (NL)**
  Designated Contracting States:
  **BE CH DE FR GB LI LU NL SE AT**

(72) Inventor: **Rossetti, Edoardo**
**I-41034 Finale Emilia (Modena) (IT)**

(74) Representative: **Rambelli, Paolo et al**
**I-10152 Torino (IT)**

(56) References cited:
| | |
|---|---|
| **EP-A- 0 025 679** | **BE-A- 735 138** |
| **GB-A- 750 605** | **GB-A- 2 078 243** |
| **GB-A- 2 978 423** | **SU-A- 1 045 906** |
| **US-A- 3 458 328** | **US-A- 4 376 654** |

Remarks:
The file contains technical information submitted after the application was filed and not included in this specification

## Description

The invention relates to a method of formulating and preparing heterochromatic paints and other related products-that is, a new process for the manufacture of general purpose multicolour paints such as are used in the construction, woodworking, plastics and mechanical engineering industries, etc. The paints obtainable via such a process likewise constitute property to be protected by the appended claims. It is known from US-A-3,458,328 an aqueous multicolour coating composition of two or more phases consisting of at least one dispersed phase consisting of discrete globules or droplets of an aqueous film-former and containing therein a hydrophilic colloid, which dispersed phase is dispersed in an aqueous dispersing medium. At least some of the dispersed globules are different in colour from the dispersing medium and a substantial number of said globules are at least about 25 micrometers in size.

It is also known from GB-A-2 078 243 a multicolor coating composition of the type in which a number of discrete coloured globules of a size visible to the naked eye are dispersed in an aqueous medium of a colour different from that of the globules. The globules comprise a mixed organic complex reaction product resulting from both ionic and non-colloid reactions of two polyelectrolytes of opposite charges and a reactant which forms a complex with one of the polyelectrolytes and are of sufficient strength and fluidity as to not subdivide substantially when brushed or rolled on a desired substrate.

In the above-described multicolor coating compositions, the dispersion of the coloured globules or droplets in the dispersing medium is a physical process, thermodynamically unstable, thus the coloured particles may mingle together with detriment of the polychrome effect and stability cannot, in general, be ensured beyond 6 to 12 months.

Furthermore, no possibility exists with such prior art paints of modifying the shape of the particles, which are predominantly spherical, and as a result, somewhat limited in aesthetic potential, not to mention the fact that it is impossible to obtain spherical particles of a diameter noticeably greater than 2 mm.

The density of the dispersing phase and dispersed phase and the viscosity of the paint must be closely monitored in order to avoid sedimentation, hence coalescence of colour particles, and the production of chromatic effects other than those initially intended. Again the determining nature of numerous variable factors and the unstable nature of the dispersion are instrumental in the production of numerous batches of paint which fail to match the effects of earlier batches of the same type.

The prior art stands in need of improvement in view of the possibility of producing paints which afford a high polychromatic potential, variety of visual effects, long term stability.

From the foregoing, one may discern the need for a solution to the problem posed by a search for polychrome paints wherein the suspended particles afford greater variety of patterns and shapes (speckled, dropped or filiform, star or disc, etc.) and possess greater long-term stability (two or three years and more) the characteristics of which can be reproduced exactly even following a long time lapse. The invention solves the problem thus outlined by adoption of a new method for the formulation of heterochromatic paints which renders greater variety and long-term stability of the shape of particles feasible by chemical reaction.

The method consists in bringing about a reaction between an anionic cellulose thickener contained in the base and cationic salts of heavy or trivalent metal dissolved in the reactive medium, the excess of cationic salts being neutralized by calcium carbonate.

The reaction results in the formation of non-soluble precipitates consituting a random dispersion of colour particles.

The method of formulating heterochromatic paints according to the invention envisages two components, the first of which being the "base", the second of which being a "reactive medium" split into two parts A and B. The heterochromatic paint is produced by an appropriate blending of the two components, and, according to the ultimate manner of carrying the method into effect, stable heterochromatic dispersions of non-soluble precipitates are produced which, when applied, exhibit a mono- or polychrome ground with a random dispersion of colour particles creating a speckled, dropped or filiform pattern, or appearing in star, disc or other shapes.

Advantages of the invention are: ample variety of random particles shapes, obtained with the extruders employed for admixing the bases; conservation of the shape of particles in suspension for ultra-long periods; and dependability and repeatability of the manufacturing process and the results thereof. The invention will now be described in detail, by way of example, with the aid of three accompanying sheets of drawings which illustrate black-and-white reproductions of heterochromatic-type paint-finishes formulated both with prior art methods, and with the method described herein.

Figs. 1 and 2 are specimens of a speckled-type finish given by a heterochromatic paint, formulated according to prior art methods, using a solvent medium;

Figs. 3 and 4 are specimens of a speckled-type finish given by a heterochromatic paint formulated according to a first version A of the method disclosed;

Figs. 5, 6, 7 and 8 are specimens of a dropped-type finish given by a heterochromatic paint formulated according to a second version B of the method disclosed;

Figs. 9, 10, 11 and 12 are specimens of a filiform-type finish given by a heterochromatic paint formulated according to a third version *C* of the method disclosed.

The method is carried into effect as follows.
Thy heterochromatic paint, a water paint, is obtained by appropriate blending of base and reactive medium.

Formulation of the base
(expressed in pp% and listed in admixing sequence)

| | |
|---|---|
| Sufficient water to reach 100 | |
| Bacteriocide | 0.010 to 0.400 |
| Ionic cellulose ether (e.g. Na CMC) | 0.050 to 6.000 |
| Inorganic pigments } | |
| Organic pigments  } | 0.200 to 20.000 |
| Mica (optional) | 0.200 to 6.000 |
| Defoaming agent (optional) | 0.010 to 0.800 |
| Coalescent (optional) | 0.050 to 1.000 |
| Copolymer emulsion containing | |
|    50% dispersed solids | 1.000 to 20.000 |
| Corrosion inhibitor (optional) | 0.010 to 0.500 |
| total pp | 100 |

| Formulation of the reactive medium (expressed in pp% and listed in admixing sequence) | |
|---|---|
| Part A | |
| Sufficient water to reach 100 | |
| Bacteriocide (optional) | 0.010 to 0.300 |
| Nonionic cellulose ether | |
|    (e.g. cellulose or polysaccharide alkyl or hydroxyalkyl) (optional) | 0.050 to 4.000 |
| Part B | |
| Water | 1.000 to 70.000 |
| Inorganic salt (of heavy or trivalent metal) | 1.000 to 30.000 |
|    total pp | 100 |

Formulation of the heterochromatic paint
(expressed in pp% and listed in admixing sequence)

| | |
|---|---|
| Reactive medium | 2.000 to 30.000 |
| Sufficient water to reach 100 | |
| base colour 1 | |
| base colour 2 | |
| base colour 3 | 40.000 to 90.000 |
| base colour n | |
| Micronized calcium carbonate | 0.100 to 6.000 |
| Defoaming agent (optional) | 0.050 to 0.500 |
| Coalescent (optional) | 0.050 to 1.000 |
| Copolymer emulsion containing 50% dispersed solids | 2.000 to 30.000 |
| Solution of bentonite (10% in water) | 0.100 to 5.000 |
| Nonionic cellulose ether in ethanol (e.g. cellulose alkyl or hydroxyalkyl, or even poly-saccharidic hydroxyethers) (60%) | 0.050 to 4.000 |
| Bacteriocide | 0.010 to 0.400 |
| Solution of caustic soda (30% in water) | 0.050 to 3.000 |
| Corrosion inhibitor (e.g. alkyl hydroxyazine nitrobenzoate) | 0.010 to 0.600 |
| total pp | 100 |

The following is an example of the formulation of a heterochromatic paint according to the invention. Components are expressed in pp%.

| | |
|---|---|
| Sufficient water to reach 100 | |
| Bacteriocide | 0.014 to 0.850 |
| Non-ionic cellulose ether | 0.031 to 3.600 |
| Solution of inorganic salt (of heavy or trivalent metal in water | 0.020 to 9.000 |
| Ionic cellulose ether | 0.020 to 5.400 |
| Inorganic pigments | |
| Organic pigments | 0.080 to 18.000 |
| Mica | 0.080 to 5.400 |
| Micronized calcium carbonate | 0.100 to 6.000 |
| Defoaming agent | 0.054 to 1.220 |
| Coalescent | 0.070 to 1.900 |
| Copolymer emulsion containing 50% dispersed solids | 2.400 to 48.000 |
| Bentonite | 0.010 to 0.500 |
| Caustic soda | 0.015 to 0.900 |
| Corrosion inhibitor | 0.014 to 1.050 |
| total pp | 100 |

The method claimed herein is divided into three stages, the first two of which being preparation of one or more bases (i.e. two or more colours), and preparation of the reactive medium and admixture of the base thereto. The third stage may be carried out in a number of ways (version A, B, or C &c.) which will differ in terms of the admixture sequence or of the manner in which components are blended, thereby obtaining the polymorphous application typical of a heterochromatic paint according to the invention.

Method of preparing the base (stage 1)

Bases are produced in given colours such as will obtain the multicolour effect sought after.
The base mixture is prepared utilizing the process currently adopted for blending water paints.
Use is made of a vessel, together with a dispersion apparatus which keeps the mixture on the move and refines the entire bulk, whose speed of rotation can be varied between, say, 0 and 2000 min$^{-1}$, and whose rotary dispersion-paddle is adjustable for height within the vessel. The apparatus also incorporates a rotor for dispersion of the pigments.

The base is formulated according to the sequence listed above. Admixture of the single components must be subject to complete solution or dispersion of the component previously introduced. The colour in question can be obtained utilizing either organic or inorganic pigments, or suitably-proportioned combinations of the two, in order to achieve the tone, saturation and luminosity sought after.

When admixed to the reactive medium, the base duly reacts with cations in the salts thereby forming non-soluble precipitates, a process which can be assisted by admixture to the base of an emulsion having similar polarity to the cellulose.

Method of preparing the reactive medium (stage II)

The reactive medium is prepared by way of the process currently utilized in the paint manufacturing industry. The non-ionic cellulose ether (alkyl or hydroxyalkyl of cellulose or polysaccharide) is dissolved in a plastic or stainless steel vessel. There is no special need to utilize a cellulose thickener in the reactive medium in order to render particles insoluble, though it is important that the cellulose thickener should be added when seeking to control the shape of the particles, if degeneration into unwanted shapes is to be avoided.

Preparation of part A being under way, the cationic compound (e.g. an inorganic salt of heavy or trivalent metal, is prepared in a separate plastic or stainless steel vessel, and then added slowly to a part A which will be kept gently stirring all the while. The reactive medium is formulated according to the sequence listed above.

Method of preparing the heterochromatic paint (stage III)

Whatever the morphology of the heterochromatic paint in production, the method of its preparation is one whereby the various colour bases are admixed to the reactive medium in a stir-and-disperse apparatus consisting of a plastic or stainless steel vessel provided with a height-adjustable rotor, or with paddles located at various heights, whose speed of rotation is variable between 0 and 2000 min$^{-1}$. The admixing sequence for components must correspond to that listed above, and each single component must dissolve and/or blend and/or react fully before the following component is introduced.

Versions of the method of preparing heterochromatic paints

It is in stage III of the process that polymorphous characteristics of the paint are determined. Different particle shapes are obtainable from the one method of formulation by admixing the base to the reactive medium in different ways, and stirring the medium at varying speeds and by different means.

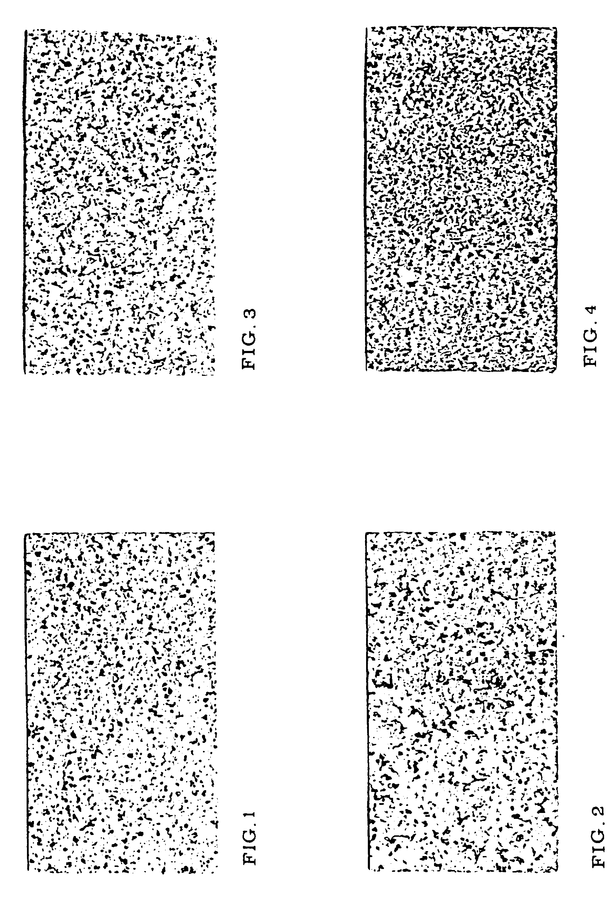

Adopting version *A* which provides a heterochromatic emulsion giving the speckled type of finish reproduced in Figs 3 and 4 in black & white photocopy, the rotor must be capable of producing a significant level of dispersion -viz, Lenhard and Cowles type, or emulsifying, centrifugal, radial, biconical, trapezoidal &c...

With the reactive medium poured into the vessel, the dispersion rotor is made to turn at 800 min$^{-1}$ or more whereupon base colour 1 is admixed, by manual means or utilizing a pump, such as to react gradually with the inorganic salt and split up into particles whose size will diminish the longer the stirring action is continued; and/or the higher the speed of rotation becomes. The same procedure is adopted for other bases (colour 2, colour 3, &c.), however many, in due proportion. By keeping a record of the pump flow rate and the speed of rotation, there will be no difficulty in repeating the manufacturing process in such a way as to obtain an identical morphology and colour specification. Adopting version *B* which provides a heterochromatic emulsion giving the dropped type of finish reproduced in Figs, 5, 6, 7 and 8 in black & white photocopy, the rotor must be of a design such as to blend without occasioning dispersion, such as the impeller type, having vanes either in V-formation or angled, or one of the various anchor types, so-called, or an auger-type, or a turbine type having vertical and contoured blades, vertical radial blades, inclined radial blades &c.

With the reactive medium poured into the vessel, the rotor is made to turn at a low speed (40 to 80 min$^{-1}$) the exact setting of which will also depend upon the type of vanes, and adjusted so as to invest the mixture with as laminar a motion as possible-i.e. without any vortex being set up. The bases are now admixed in succession (colours 1, 2, 3...), being extruded in solid and/or liquid state from nozzles of appropriate diameter (e.g. 2 to 4 mm) which may be immersed directly into the medium, or installed at surface level, or even marginally thereabove, say, 5 cm or more. In view of the fact that the morphology of particles held in suspension will depend upon the nozzle diameter and the speed of rotation, physical parameters such as these must be maintained constant if repeatability of the batch specification is to be ensured.

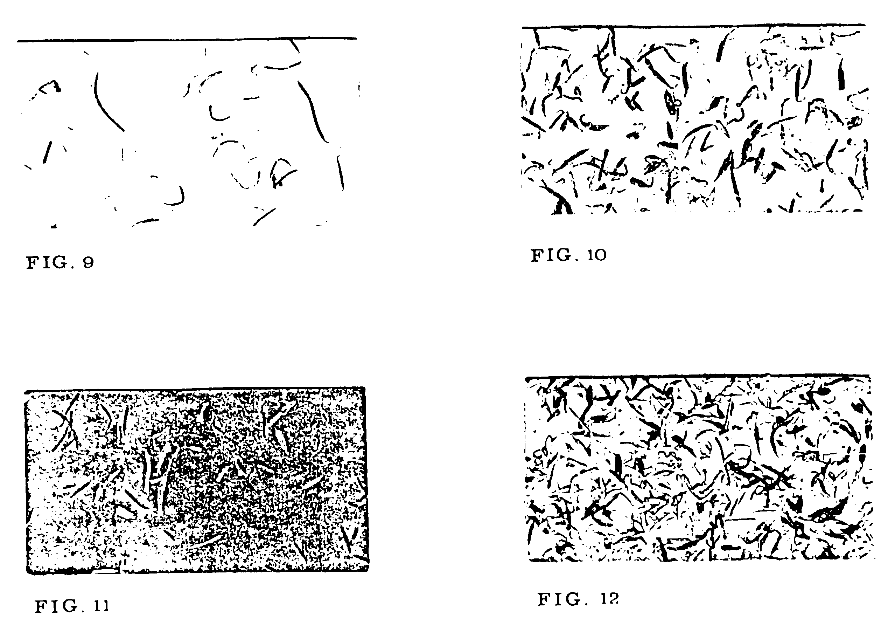

Adopting version *C*, one obtains the filiform type of multicolour finish reproduced in Figs. 9, 10, 11 and 12 in black & white photocopy. The paint providing the filiform finish of Fig. 9 is formulated from the heterochromatic components already described, whilst in that providing the filiform finish of Figs. 10 and 12, though formulated in the same manner, different proportions are utilized; the quantity of colour 1 (white) is reduced in favour of colour 2 (blue) and colour 3 (grey). The filiform particles are obtained by applying version *B,* though utilizing nozzles of much smaller diameter, say, 0.3 to 0.8 mm.

Before extruding the filiform particles, one can give the paint ground colour a substantially uniform appearance (Figs. 9 to 12) by proceeding as follows.

With the reactive medium poured into the vessel, a turbine is fitted to the blender shaft whose design is such as to produce a strong dispersive action (version *A*) with the rotor turning at maximum speed (1400 min$^{-1}$ at least). Base colour 1 is now admixed, and the refining action is made to continue, thereby producing particles of such fineness that, applying the finish, a ground of uniform appearance can be obtained against which the random filiform splashes will stand out in contrast.

At this juncture, the high speed dispersion turbine must be replaced with a low speed blend-only rotor (version *B*). The random filiform particles are not obtained, following dispersion of dour 1, by the admixture of colour 2 and colour 3, extruding the relative bases from small-diameter nozzles as afore-mentioned. The length of the filiform particles is determined by their viscosity and by the speed of reaction with the medium; their random diameter is dependent upon the diameter of the nozzles.

Thus, combining versions *A, B* and *C* as described, together with other such 'versions' which may be deduced in the light of the foregoing, regarding the shape and diameter of nozzles or means of extrusion generally, and the colours of different bases, it becomes possible to obtain an infinite variety of patterns and chromatic effects.

The following formulations are those employed for the finishes illustrated in the drawings.

| Formulation of white base component-colour 1 (Figs. 4, 6, 9, 10 & 12) | |
|---|---|
| Water | 80.100 |
| Bacteriocide | 0.200 |
| Sodium carboxymethylcellulose | 1.000 |
| Inorganic pigment-titanium dioxide | 6.000 |
| Mica | 1.500 |
| Coalescent | 0.500 |
| Defoaming agent | 0.400 |
| Copolymer-anionic vinyl-ethylene acetate with 50% suspended solids | 10.000 |
| Corrosion inhibitor | 0.300 |
| total pp | $\overline{100}$ |

| Formulation of blue base component-colour 2 (Figs. 4, 6, 9, 10 & 12) | |
|---|---|
| Water | 80.100 |
| Bacteriocide | 0.200 |
| Sodium carboxymethylcellulose | 1.000 |
| Inorganic pigment-titanium dioxide | 5.800 |
| Organic pigment-phthalocyanine blue | 0.200 |
| Mica | 1.500 |
| Coalescent | 0.500 |
| Defoaming agent | 0.400 |
| Copolymer-anionic vinyl-ethylene acetate with 50% suspended solids | 10.000 |
| Corrosion inhibitor | 0.300 |
| total pp | $\overline{100}$ |

| Formulation of grey base component-colour 3 (Figs. 4, 6, 9, 10 & 12) | |
|---|---|
| Water | 80.000 |
| Bacteriocide | 0.200 |
| Sodium carboxymethylcellulose | 1.000 |
| Inorganic pigment-titanium dioxide | 5.000 |

Continuation of the Table on the next page

(continued)

| Formulation of grey base component-colour 3 (Figs. 4, 6, 9, 10 & 12) | |
|---|---|
| Inorganic pigment-yellow ferrous oxide | 0.100 |
| Inorganic pigment-black ferrous oxide | 1.000 |
| Mica | 1.500 |
| Coalescent | 0.500 |
| Defoaming agent | 0.400 |
| Copolymer-anionic vinyl-ethylene acetate with 50% suspended solids | 10.000 |
| Corrosion inhibitor | 0.300 |
| total pp | $\overline{100}$ |

| Formulation of reactive medium (Figs. 4, 6, 9, 10 & 12) | |
|---|---|
| Part A | |
| Water | 59.400 |
| polygalactomannan hydroxyalkyl | 0.600 |
| Part B | |
| Water | 30.000 |
| Aluminium sulphate-$Al_2 (SO_4)_3$ | 10.000 |
| total pp | $\overline{100}$ |

| Formulation of heterochromatic paint (Figs. 4, 6, 9, 10 & 12) | |
|---|---|
| Reactive medium | 10.000 |
| White base-colour 1 | 60.000 |
| Blue base-colour 2 | 6.600 |
| Grey base-colour 3 | 5.000 |
| Micronized calcium carbonate | 3.000 |
| Defoaming agent | 0.200 |
| Coalescent | 0.500 |
| Copolymer-styrene acrylic suspension containing 50% solids | 12.000 |
| Solution of bentonite-10% in water | 0.800 |
| Solution of polygalactomannan hydroxyalkyl-60% in ethanol | 0.400 |
| Bacteriocide | 0.200 |
| Solution of caustic soda-30% in water | 1.000 |
| Corrosion inhibitor | 0.300 |
| total pp | $\overline{100}$ |

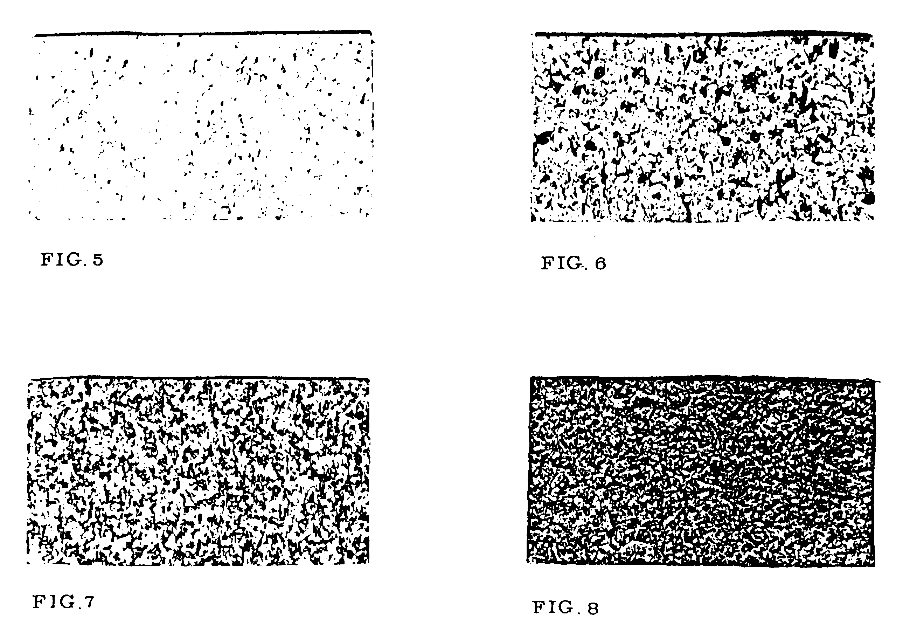

Figs. 5, 7, 8 and 11 show further examples of paint finishes affording different colour combinations, obtained with heterochromatic emulsions according to the invention. When carrying the invention into effect, materials, details, may all differ from those described, but technically equivalent whilst by no means straying from within the bounds of protection afforded to the invention by claims appended. The following variation might be applied in the case of the speckled multi-colour finish illustrated in black & white photocopy in Figs. 3 and 4, bearing in mind that variations of this nature fall within the scope of the method and the different versions of its implementation disclosed in the foregoing pages.

Formulation of the bases and of the reactive medium remain unaltered. Stage III on the other hand, in which formulation of the heterochromatic paint is brought about, remains substantially unaltered in terms of total quantities introduced, though the sequence of mixing single components is modified.

| Variation on the formulation of heterochromatic paint (as in Fig. 4) | |
|---|---|
| Base-colour 1 | 60.000 |
| Reactive medium | 5.000 |
| Calcium carbonate | 1.500 |
| Base-colour 2 | 6.600 |
| Reactive medium | 3.000 |
| Calcium carbonate | 0.500 |
| Base -colour 3 | 5.000 |
| Reactive medium | 2.000 |
| Calcium carbonate | 1.000 |
| Defoaming agent | 0.200 |
| Coalescent | 0.500 |
| Copolymer-styrene acrylic suspension containing 50% solids | 12.000 |
| Solution of bentonite-10% in water | 0.800 |
| Solution of polygalactomannan hydroxyalkyl-60% in ethanol | 0.400 |
| Bacteriocide | 0.200 |
| Solution of caustic soda-30% in water | 1.000 |
| Corrosion inhibitor | 0.300 |
| total pp | $\overline{100}$ |

The variation thus formulated (version D) is carried into effect as follows.

Base colour 1 is poured into a plastic or stainless steel vessel, care having been taken to fit the blender with a turbine designed to provide a strong dispersive action. The rotor is made to turn at 800 min$^{-1}$ or more, and introduction of the reactive medium commenced. As the medium gradually comes into contact with the base, a reaction takes place which produces the finely divided particles. Granulometry being obtained as required, the rotor speed is duly reduced, whereupon the reaction is neutralized by admixture of the calcium carbonate.

Base colour 2 is now added, the rotor speed once again increased, and the reactive medium introduced. Having obtained the requisite granulometry, rotor speed is lowered, whereupon the reaction is neutralized by admixture of the calcium carbonate.

This cycle is duly repeated for each base utilized. With the granulated colour particles formed, the paint is integrated by admixture of the remaining components listed.

As far as regards the sequence of admixture in each formulation disclosed, this happens to be the most convenient in each case. Heterochromatic paints are obtainable nonetheless implementing changes in the sequence that remain compatible with the method.

**Claims**

1. Method for the formulation and preparation of heterochromatic paints and related products consisting of a dispersion of colour particles in an aqueous dispersing medium, the method comprising reacting one or more base mediums containing an anionic cellulose thickener, each of said base mediums, when more than one is used, being of a different colour, with a reactive medium comprising an inorganic salt, characterised in that an inorganic salt of heavy or trivalent metal is used and calcium carbonate is added immediately to the reaction product to neutralize excess cationic salts, said inorganic salt being used in an amount sufficient to form reaction products consisting essentially of non-soluble precipitated colour particles.

2. Method as in claim 1 wherein the base and the reactive medium are obtained by formulation of the following components, expressed quantitatively in parts per hundred by weight (ppt) and listed in the preferred sequence of admixing.

```
Base


Sufficient water to reach 100
Bacteriocide                              0.010 to   0.400
Ionic cellulose ether
(e.g. Na CMC)                             0.050 to   6.000
Inorganic and organic pigments            0.200 to 20.000
Mica (optional)                           0.200 to   6.000


Defoaming agent (optional)               0.010 to   0.800
Coalescent (optional)                    0.050 to   1.000
Copolymer emulsion containing
50% dispersed solids                     1.000 to 20.000
Corrosion inhibitor (optional)           0.010 to   0.500
                                         ----------------

                       total pp          100
```

| Reactive medium | |
|---|---|
| Part A | |
| Sufficient water to reach 100 Bacteriocide | 0.010 to 0.300 |
| Non-ionic cellulose ether (e.g. cellulose or polysaccaride alkyl or hydroxyalkyl) (optional) | 0.050 to 4.000 |
| Part B | |
| Water | 1.000 to 70.000 |
| Inorganic salt (of heavy or trivalent metal) | 1.000 to 30.000 |
| Total pp | 100 |

**3.** Heterochromatic paint as in claims 1 and 2, characterized in that it is formulated from the following components in parts per hundred by weight, listed in preferred sequence of admixing.

```
Reactive medium                               2.000 to 30.000
Sufficient water to reach 100
Base colour 1
Base colour 2
Base colour 3                                40.000 to 90.000
------------
Base colour n
Micronized calcium carbonate            0.100 to   6.000
Defoaming agent (optional)              0.050 to   0.500
Coalescent (optional)                   0.050 to   1.000
Copolymer emulsion containing 50%
dispersed solids                        2.000 to 30.000
Solution of bentonite

    (10% in water)                      0.100 to   5.000
    Non-ionic cellulose ether
    (e.g. cellulose alkyl or hydroxyalkyl,
    or even polysaccaridic hydroxyethers)
    dissolved 60% in ethanol            0.050 to   4.000
    Bacteriocide                        0.010 to   0.400
    Solution of caustic soda
    (30% in water)                      0.050 to   3.000
    Corrosion inhibitor
    (e.g. alkyl hydroxyazine
    nitrobenzoate)                      0.010 to   0.600
                                        ------------------
                        Total pp          100
```

4.  Heterochromatic paint as in claim 3 wherein the formulation in pp% is as follows.

| | |
|---|---|
| Sufficient water to reach 100 Bacteriocide | 0.014 to 0.850 |
| Non-ionic cellulose ether | 0.031 to 3.600 |
| Solution of inorganic salt (of heavy or trivalent metal) in water | 0.020 to 9.000 |
| Ionic cellulose ether | 0.020 to 5.400 |
| Inorganic and organic pigments | 0.080 to 18.000 |
| Mica | 0.080 to 5.400 |
| Micronized calcium carbonate | 0.100 to 6.000 |
| Defoaming agent | 0.054 to 1.220 |
| Coalescent | 0.070 to 1.900 |
| Copolymer emulsion containing 50% dispersed solids | 2.400 to 48.000 |
| Bentonite | 0.010 to 0.500 |

Continuation of the Table on the next page

(continued)

| Caustic soda | 0.015 to 0.900 |
|---|---|
| Corrosion inhibitor | 0.014 to 1.050 |
| total pp | 100 |

5. Method according to claims 1 or 2 characterized in that two or more base mediums of different colours are admixed in succession to the reactive medium in a stir-and-disperse apparatus consisting of a plastic or stainless steel vessel provided with a rotor capable of producing a significant level of dispersion and turning at a high speed of 800 $min^{-1}$ or more, thus obtaining a speckled finish.

6. Method according to claims 1 or 2 characterized in that two or more base mediums of different colour are admixed in succession to the reactive medium, whilst invested with laminar motion, in a stir-and-disperse apparatus consisting of a plastic or stainless steel vessel provided with a rotor designed to produce a blending action only at low speed of 40 to 80 $min^{-1}$, and that the bases are extruded from nozzles having a diameter of 2 to 4mm, which may be either immersed directlly into the medium, or disposed at surface level thereof, or located marginally thereabove, thereby producing particles of a medium size order and obtaining a dropped finish.

7. Method according to claims 1 or 2 characterized in that a first base for the ground colour is admixed to the reactive medium and finely dispersed in a stir-and-disperse apparatus consisting of a plastic or stainless steel vessel provided with a rotor designed to produce a strong dispersive action, turning at an extra high speed of 1400$min^{-1}$ or more whereupon the aforesaid rotor is replaced by a rotor designed to produce blending action only, turning at low speed of 40 to 80$min^{-1}$, with other bases of different colour being admixed in succession to the reactive medium; and that the other bases are extruded from nozzles of small diameter of 0.3 to 0.8mm, either immersed directly into the reactive medium , or disposed at surface level thereof, or located marginally thereabove, thus obtaining a random dispersion of colour particles creating a filiform finish of appearring in star, disc or other shapes, depending upon the cross section of said nozzles.

8. Method according to claims 1 or 2 characterized in that a first base is introduced in a stir-and-disperse apparatus consisting of a plastic or stainless steel vessel provided with a rotor designed to produce a strong dispersive action and turning at a high speed of 800min or more; and that a proportion of the reactive medium is admixed to the first base, whereupon, having obtained the requisite granulometry, the rotor speed is lowered and the reaction is neutralized with calcium carbonate; and that the above cycle is repeated for the second and subsequent bases, thus obtaining a speckled finish.

9. Heterochromatic paint obtained according to the method of claim 5, characterized in that it ehxibits a speckled type of finish.

10. Heterochromatic paint obtained according to the method of claim 6, characterized in that it exhibits a dropped type of finish.

11. Heterochromatic paint obtained according to the method of claim 7, characterized in that it exhibits colour particles creating a filiform type finish or appearing in star, disc or other shapes.

12. Heterochromatic paint obtained according to the method of claim 8, characterized in that it exhibits a speckled type of finish.

**Patentansprüche**

1. Methode zur Formulierung und Herstellung heterochromer Anstrichfarben und ähnlicher Produkte bestehend aus einer Dispersion von Farbteilchen in einem wässerigen Dispersionsmedium, wobei die Methode die Reaktion eines oder mehrerer, einen anionischen Zelluloseeindicker enthaltenden, Grundmedien, wobei jedes Grundmedium, falls mehr als ein gebracht wird, von verschiedener Farbe ist, mit einem ein anorganisches Salz enthaltenden Reaktionsmedium enthält, dadurch gekennzeichnet daß ein anorganisches Salz eines Schwer - bzw. dreiwertigen Metalls eingesetzt wird und Kalziumkarbonat dem Reaktionsprodukt unmittelbar zugesetzt wird um den Überschuß von kationischem Salz zu neutralizieren, wobei das anorganische Salz in einer ausreichenden Menge zugegeben wird, um im wesentlichen aus unlöslichen, gefällten Farbteilchen bestehende Reaktionsprodukte zu bilden.

2. Methode nach Patentanspruch 1, dadurch gekennzeichnet, daß das Grundmedium und das Reaktionsmedium aus einer Formulierung folgender Komponenten erhalten werden, die quantitativ in Gewichtsteilen pro Hundert (pp%) ausgedrückt und in der vorgezogenen Versatzfolge verzeichnet sind.

| | |
|---|---|
| Grund Wasserzusatz auf 100 Bakterizid | 0,010 bis 0,400 |
| Zelluloseätherion (bspw. Na CMC) | 0,050 bis 6,000 |
| anorganische und organische Pigmente | 0,200 bis 20,000 |
| Glimmer (auf Wunsch) | 0,200 bis 6,000 |
| Antischaummittel (auf Wunsch) | 0,010 bis 0,800 |
| Koaleszenzmittel (auf Wunsch) | 0,050 bis 1,000 |
| Mischpolymeremulsion mit 50% dispergierten Feststoffen | 1,000 bis 20,000 |
| Korrosionsinhibitor (auf Wunsch) | 0,010 bis 0,500 |
| pp insgesamt | 100 |

| Reaktionsmedium | |
|---|---|
| Bestandteil A | |
| Wasserzusatz auf 100 Bakterizid | 0,010 bis 0,300 |
| nichtionischer Zelluloseäther (z.B. Zellulose- bzw. Polysaccharid-alkyl oder- Hydroxialkyl) (auf Wunsch) | 0,050 bis 4,000 |
| Bestandteil B | |
| Wasser | 1,000 bis 70,000 |
| anorganisches Salz (eines Schwe- bzw. dreiwertigen Metalls) | 1,000 bis 30,000 |
| pp insgesamt | 100 |

3. Heterochrome Anstrichfarbe nach Patentansprüchen 1 und 2, dadurch gekennzeichnet, daß sie aus folgenden Komponenten in Gewichtsteilen pro Hundert formuliert und in der vorgezogenen Versatzfolge verzeichnet ist.

```
Reaktionsmedium                          2,000 bis 30,000

Wasserzusatz auf 100

Grundfarbe 1  ⎫
Grundfarbe 2  ⎪
Grundfarbe 3  ⎬                          40,000 bis 90,000
------------  ⎪
Grundfarbe n  ⎭

mikronisiertes Kalziumkarbonat           0,100 bis  6,000

Antischaummittel (auf Wunsch)            0,050 bis  0,500

Koaleszenzmittel (auf Wunsch)            0,050 bis  1,000

Mischpolymeremulsion mit 50%
    dispergierten Feststoffen            2,000 bis 30,000

Bentonitlösung (10% in Wasser)           0,100 bis  5,000

nichtionischer Zelluloseäther

    (z.B. Zellulosealkyl bzw.

    -Hydroxialkyl oder sogar

    Polysaccharidhydroxiäther)

    zu 60% in Äthanol gelöst             0,050 bis  4,000

Bakterizid                               0,010 bis  0,400



Ätznatronlösung (30% in Wasser)          0,050 bis  3,000

Korrosionsinhibitor (bspw.

    Alkyl-Hydroxiazine-Nitrobenzoat)    0,010 bis  0,600

              pp insgesamt                    100
```

**4.** Heterochrome Anstrichfarbe nach Patentanspruch 3, die folgende Formulierung in pp% aufweist.

| | |
|---|---|
| Wasserzusatz auf 100 Bakterizid | 0,014 bis 0,850 |
| nichtionischer Zelluloseäther | 0,031 bis 3,600 |
| Wasserlösung anorganischen Salzes (eines Schwer- bzw. dreiwertigen Metalls) | 0,020 bis 9,000 |
| Zelluloseätherion | 0,020 bis 5,400 |
| anorganische und organische Pigmente | 0,080 bis 18,000 |
| Glimmer | 0,080 bis 5,400 |
| mikronisiertes Kalziumkarbonat | 0,100 bis 6,000 |
| Antischaummittel | 0,054 bis 1,220 |
| Koaleszenzmittel | 0,070 bis 1,900 |
| Mischpolymeremulsion mit 50% dispergierten Feststoffen | 2,400 bis 48,000 |
| Bentonit | 0,010 bis 0,500 |
| Ätznatron | 0,015 bis 0,900 |
| Korrosionsinhibitor | 0,014 bis 1,050 |
| pp insgesamt | $\overline{100}$ |

**5.** Methode nach Patentansprüchen 1 oder 2, dadurch gekennzeichnet, daß zwei oder mehr verschiedenfarbiger Grundmedien im Anschluß an das Reaktionsmedium in einem Rühr-und Dispersionsgerät mit einem Kunststoff- oder Edelstahlbehälter, einem Rotor für die Erzeugung eines bedeutsamen Dispersionsgrades mit einer Hochdrehzahl vom 800 min$^{-1}$ oder darüber zu einem gesprenkelten Überzug vermischt werden.

**6.** Methode nach Patentansprüchen 1 oder 2, dadurch gekennzeichnet, daß zwei oder mehr verschiedenfarbiger Grundmedien im Anschluß an das Reaktionsmedium durch Laminarbewegung in einem Rühr-und Dispersionsgerät mit einem Kunststoff- oder Edelstahlbehälter, einem nur zur Mischwirkung bei Niedrigdrehzahl von 40 bis 80 min$^{-1}$ konzipierten Rotor vermischt werden, und außerdem dadurch, daß die Grundmedien aus Düsen mit Durchmesser 2 bis 4 mm, entweder direkt ins Medium eingetaucht oder auf dessen Pegel bzw. randseitig darüber angebracht, gezogen werden und somit Teilchen mittlerer Größenordnung erzeugen und einen getropften Überzug ergeben.

**7.** Methode nach Patentansprüchen 1 oder 2, dadurch gekennzeichnet, daß ein erstes Grundmedium für die Grundfarbe zum Reaktionsmedium gemischt und in einem Rühr- und Dispersionsgerät mit einem Kunststoff- oder Edelstahlbehälter fein dispergiert wird. Der Rotor in Rühr- und Dispersionsgerät ist für eine starke Dispersionswirkung ausgelegt und dreht bei einer extra hohen Drehzahl von 1400 min$^{-1}$ oder darüber, worauf genannter Rotor mit einem, bei einer Niedrigdrehzahl von 40 bis 80 min$^{-1}$ drehenden und nur für die Mischwirkung von anderen und im Anschluß an das Reaktionsmedium zugesetzten verschiedenfarbigen Grundmedien, konzipiert ausgewechselt wird, wobei die anderen Grundmedien aus Düsen mit Kleindurchmesser 0,3 bis 0,8 mm, entweder direkt ins Reaktionsmedium eingetaucht oder auf dessen Pegel bzw. randseitig darüber angebracht, gezogen werden, somit eine zufällige Dispersion von Farbteilchen ergeben und einem fadenförmigen Überzug in Stern, Scheiben- oder anderer Ausbildung zeitigen, je nach Querschnitt genannter Düsen.

**8.** Methode nach Patentansprüchen 1 oder 2, dadurch gekennzeichnet, daß ein erstes Grundmedium in ein Rühr- und Dispersionsgerät mit einem Kunststoff- oder Edelstahlbehälter und einem für eine starke Dispersionswirkung ausgelegten und bei einer Hochdrehzahl von 800 min$^{-1}$ oder darüber drehenden Rotor eingegeben wird, außerdem dadurch, daß ein Anteil des Reaktionsmediums zum ersten Grundmedium gemischt wird, woraufhin nach Erhaltung der geforderten Korngröße die Rotordrehzahl gesenkt und die Reaktion mit Kalziumkarbonat neutralisiert wird, ferner daß die genannte Reihenfolge für das zweite und die weiteren Grundmedien wiederholt wird, sich hierdurch ein gesprenkelter Überzug herausbildet.

**9.** Heterochrome Anstrichfarbe, nach der Methode von Patentanspruch 5 erhalten, dadurch gekennzeichnet, daß sie einen gesprenkelten Überzugstyp aufzeigt.

**10.** Heterochrome Anstrichfarbe, nach der Methode von Patentanspruch 6 erhalten, dadurch gekennzeichnet, daß sie einen getropften Überzugstyp aufzeigt.

**11.** Heterochrome Anstrichfarbe, nach der Methode von Patentanspruch 7 erhalten, dadurch gekennzeichnet, daß sie Farbteilchen aufweist, die einen fadenförmigen Überzugstyp bilden oder in Stern-, Scheiben bzw. anderen Formen erscheinen.

**12.** Heterochrome Anstrichfarbe, nach der Methode von Patentanspruch 8 erhalten, dadurch gekennzeichnet, daß sie einen gesprenkelten Überzugstyp aufzeigt.

**Revendications**

**1.** Méthode de formulation et de préparation de revêtements hétérochromes et de produits apparentés consistant en la dispersion de particules de couleur dans un milieu de dispersion aqueux, la méthode comprenant la réaction d'un ou plusieurs milieux de base contenant un épaississant anionique à base de cellulose, chacun de ces milieux de base, si on utilise plus d'un milieu de base, étant d'une couleur différente avec un milieu réactif comprenant un sel inorganique, caractérisée par le fait qu'on utilise un sel inorganique d'un métal lourd ou trivalent,et du carbonate de calcium est ajouté immédiatement au produit de la réaction pour neutraliser l'excès en sel cationique, ledit sel inorganique étant utilisé en quantité suffisante pour entraîner la formation de produits de réaction, soit essentiellement des particules de couleur non solubles précipitées.

**2.** Méthode, selon la revendication 1, où le milieu de base et le milieu réactif sont obtenus par la formulation des composants suivants, exprimés de façon quantitative en pourcentage selon le poids (%) et énumérés selon une séquence préférentielle d'addition au mélange.

| Base          Eau suffisante pour arriver à 100 Bactéricide | de 0,010 à 0,400 |
|---|---|
| Ether ionique de cellulose (par ex. Na CMC) | de 0,050 à 6,000 |
| Pigments organiques et inorganiques | de 0,200 à 20,000 |
| Mica (à option) | de 0,200 à 6,000 |
| Agent antimoussant (à option) | de 0,010 à 0,800 |
| Floculant (à option) | de 0,050 à 1,000 |
| Emulsion copolymère contenant 50% de solides dispersés | de 1,000 à 20,000 |
| Inhibiteur de corrosion (à option) | de 0,010 à 0,500 |
| total en % | $\overline{100}$ |

| Milieu réactif | |
|---|---|
| Partie A | |
| Eau suffisante pour arriver à 100 Bactéricide | de 0,010 à 0,300 |
| Ether non ionique de cellulose (par ex. alkyle ou hydroxyalkyle de cellulose ou de saccharide) (à option) | de 0,050 à 4,000 |
| Partie B | |
| Eau | de 1,000 à 70,000 |
| Sel inorganique (de métal lourd ou trivalent) | de 1,000 à 30,000 |
| total en % | $\overline{100}$ |

3.  Revêtement hétérochrome selon les revendications 1 et 2, caractérisé par le fait qu'il est constitué par les composants suivants en pourcentage selon le poids, énumérés en séquence préférentielle de mélange.

```
Milieu réactif                              de 2,000 à 30,000
Eau suffisante pour arriver à 100
Couleur de base 1  ⎫
Couleur de base 2  ⎪
Couleur de base 3  ⎬        de 40,000 à 90,000
------------------  ⎪
Couleur de base n  ⎭
Carbonate de calcium micronisé              de 0,100 à  6,000
Agent antimoussant (à option)               de 0,050 à  0,500
Floculant (à option)                        de 0,050 à  1,000
Emulsion copolymère contenant 50%
   de solides dispersés                     de 2,000 à 30,000
Solution de bentonite (10% en eau)          de 0,100 à  5,000
Ether non ionique de cellulose (par ex. alkyle ou hydroxyalkyle
   de cellulose ou bien hydroxyethers
   de polysaccharides)
```

```
60% dissous en éthanol                          de 0,050 à  4,000
Bactéricide                                     de 0,010 à  0,400
Solution de soude caustique (30% en eau) de0,050 à  3,000
Inhibiteur de corrosion (par ex.
    alkyle hydroxyazines nitrobenzoate)    de 0,010 à  0,600
                            total en %             100
```

4. Revêtement hétérochrome selon la revendication 3 où la formule en pourcentage selon le poids est ainsi présentée:

| | |
|---|---|
| Eau suffisante pour arriver à 100 Bactéricide | de 0,014 à 0,850 |
| Ether non ionique de cellulose | de 0,031 à 3,600 |
| Solution de sel inorganique (de métal lourd ou trivalent) | de 0,020 à 9,000 |
| Ether ionique de cellulose | de 0,020 à 5,400 |
| Pigments organiques et inorganiques | de 0,080 à 18,000 |
| Mica | de 0,080 à 5,400 |
| Carbonate de calcium micronisé | de 0,100 à 6,000 |
| Agent antimoussant | de 0,054 à 1,220 |
| Floculant | de 0,070 à 1,900 |
| Emulsion copolymère contenant 50% de solides dispersés | de 2,400 à 48,000 |
| Bentonite | de 0,010 à 0,500 |
| Soude caustique | de 0,015 à 0,900 |
| Inhibiteur de corrosion | de 0,014 à 1,050 |
| total en % | $\overline{100}$ |

5. Méthode selon les revendications 1 ou 2, caractérisée par le fait que deux ou plusieurs milieux de base de différentes couleurs sont ajoutés successivement au milieu réactif dans un appareil de mélange et dispersion consistant en un récipient de plastique ou d'acier inoxydable pourvu d'un rotor capable de produire un niveau de dispersion considérable et une rotation à vitesse élevée de 800 min$^{-1}$ ou plus, en obtenant ainsi un aspect tacheté.

6. Méthode selon les revendications 1 ou 2, caractérisée par le fait que deux ou plusieurs milieux de base de différente couleur sont ajoutés successivement au milieu réactif, avec mouvement laminaire, dans un appareil de mélange et dispersion consistant en un récipient de plastique ou d'acier inoxydable doté d'un rotor devant produire une action mélangeante seulement à une vitesse lente de 40 à 80 min$^{-1}$ et que les bases sont extrudées des buses ayant un diamètre de 2 à 4 mm, qui peuvent être soit immergées directement dans le milieu soitdisposées à sa surface soit placées marginalement en-dessus, produisant ainsi des particules de taille moyenne et obtenant un aspect à goutte.

7. Méthode selon les revendications 1 ou 2, caractérisée par le fait qu'une première base pour la couleur de base est mélangée au milieu réactif et finement dispersée dans un appareil de mélange et dispersion consistant en un récipient de plastique ou d'acier inoxydable pourvu d'un rotor devant produire une forte action de dispersion, tournant a la vitesse très élevée de 1400 min$^{-1}$ ou plus après quoi ledit rotor est remplacé par un autre rotor ne devant produire qu'un mouvement de mélange, en tournant à une vitesse faible de 40 à 80 min$^{-1}$ avec d'autres bases de différente couleur étant mélangées successivement au milieu réactif, les autres bases sont extrudées des buses de faible diamètre de 0,3 à 0,8 mm, ou bien immergées directement dans le milieu réactif, ou disposées directement sur sa surface ou placées marginalement en-dessus, obtenant ainsi une dispersion désordonnée de particules de couleur, créant un aspect filiforme ou en déterminant une forme en étoile, disque ou autres, suivant la section transversale des dites buses.

8. Méthode selon les revendications 1 ou 2, caractérisée par le fait qu'une première base est introduite dans un appareil de mélange-dispersion consistant en un récipient de plastique ou d'acier inoxydable pourvu d'un rotor destiné à la production d'une forte action de dispersion et tournant à une vitesse élevée de 800 min$^{-1}$ ou plus; qu'une partie du milieu réactif est mélangée à la première base, après quoi, ayant obtenu la granulométrie voulue, la vitesse du rotor est affaiblie et la réaction est neutralisée avec du carbonate de calcium, et que ledit cycle est répété pour la deuxième base ainsi que pour les suivantes, obtenant ainsi un aspect tacheté.

9. Revêtement hétérochrome obtenu selon la méthode de la revendication 5, caractérisé par le fait qu'il présente un aspect du type tacheté.

10. Revêtement hétérochrome obtenu selon la méthode de la revendication 6, caractérisé par le fait qu'il présente un aspect du type à goutte.

11. Revêtement hétérochrome obtenu suivant la méthode de la revendication 7, caractérisé par le fait qu'il présente des particules de couleur créant un aspect filiforme ou une forme en étoile, disque ou autres.

12. Revêtement hétérochrome obtenu suivant la méthode de la revendication 8, caractérisé par le fait qu'il présente un aspect du type tacheté.

FIG. 3

FIG. 4

FIG. 1

FIG. 2

18

FIG. 6

FIG. 8

FIG. 5

FIG. 7

19

EP 0 182 962 B2

FIG. 10

FIG. 12

FIG. 9

FIG. 11